# EUROPÄISCHE PATENTSCHRIFT

(11) **EP 2 234 867 B1**
(45) Veröffentlichungstag und Bekanntmachung des Hinweises auf die Patenterteilung: **15.02.2012**
(21) Anmeldenummer: 08803209.9
(22) Anmeldetag: 25.08.2008
(51) Int. Cl.: B62D 53/08

(54) **STÜTZTRAVERSE**
SUPPORTING TRAVERSE
TRAVERSE DE SOUTIEN

(30) Priorität: 15.11.2007 DE 102007054613
(43) Veröffentlichungstag der Anmeldung: 06.10.2010
(73) Patentinhaber: Jost-Werke GmbH, 63263 Neu-Isenburg (DE)
(72) Erfinder: ALGÜERA GALLEGO, José Manuel, 63739 Aschaffenburg (DE)
(74) Vertreter: Mehler, Klaus
(86) Internationale Anmeldenummer: PCT/EP2008/061094
(87) Internationale Veröffentlichungsnummer: WO 2009/062766

(56) Entgegenhaltungen:
- EP-A- 0 694 467
- WO-A-97/14606
- WO-A-2005/037578
- US-A- 5 765 849

## Beschreibung

Die Erfindung betrifft eine Stütztraverse zur Aussteifung eines Fahrzeugrahmens, umfassend einen Querträger mit einem jeweils endseitig daran ausgeformten Befestigungsbereich, welcher mit dem Fahrzeugrahmen verbindbar ist, sowie zwischen den Befestigungsbereichen an dem Querträger angreifende Lagerböcke , wobei die Lagerböcke und der Querträger unlösbar miteinander verbunden sind. Außerdem ist eine Anordnung der Stütztraverse an dem Fahrzeugrahmen beansprucht.

Derartige Stütztraversen werden insbesondere an Fahrzeugrahmen von Sattelzugfahrzeugen verbaut und tragen die Lagerböcke, auf denen sich wiederum die Sattelkupplung abstützt. Aufgrund der schwenkbaren Lagerung der Sattelkupplung kann diese gegenüber den ortsfest am Zugfahrzeug befestigten Lagerböcken eine Kippbewegung um eine horizontale Schwenkachse vollziehen. Die im Fahrbetrieb auftretenden Kräfte werden über die Sattelkupplung, die Lagerböcke und den Querträger in den-Fahrzeugrahmen des Zugfahrzeugs eingeleitet.

Eine Stütztraverse ist aus der EP 1 764 290 A1 bekannt geworden. Die darin beschriebene Sattelkupplung umfasst eine Kupplungsplatte und mindestens zwei Lagerböcke, welche lösbar an einem Querträger der Stütztraverse befestigt sind. Die lösbare Befestigung hat jedoch den Nachteil, dass es zwischen den Lagerböcken und dem Querträger zu Setzbeträgen kommen kann, welche unter andauernder Belastung größer werden. In extremen Fahrsituationen kann es schließlich zu einem Abreißen der Lagerböcke von dem Querträger kommen.

Eine gattungsgemäße Stütztraverse ist aus der EP-A-694467 bekannt geworden.

Es ist Aufgabe der Erfindung, eine vervindungssteife und korrosionsgeschützte Konstruktion zu erzielen.

Die Aufgabe wird erfindungsgemäß mit einer Stütztraverse gemäß Auspruch 1 gelöst.

Es hat sich als günstig erwiesen, wenn die Befestigungsbereiche senkrecht zur axialen Erstreckung des Querträgers ausgerichtete Flanschplatten sind. Die Flanschplatten schließen den Querträger endseitig ab, wodurch bei dem als Hohlprofil ausgebildeten Querträger ein besonders effektiver Schutz gegen Korrosion erreicht wird. Auch lässt sich durch die Gestaltung der Flanschplatte eine gute Verbindung zum Rahmen herstellen.

Unter einer unlösbaren Verbindung wird in erster Linie eine Fertigung von Lagerböcken und Querträger als einstückiges Gussteil verstanden. Hieraus ergibt sich eine homogene Struktur des Querträgers und der Lagerböcke. Darüber hinaus hat die Fertigung als Gussteil den Vorteil besonders niedriger Herstellungskosten.

Alternativ zu der vorstehend beschriebenen Ausführungsform können die Lagerböcke auch mittels einer Nietverbindung an dem Querträger befestigt sein. Ebenso ist es möglich, die Lagerböcke an den Querträger anzuschweißen und dadurch eine stoffschlüssige und einstückige Verbindung herzustellen.

Vorzugsweise ist an dem Querträger und/oder den Lagerböcken mindestens ein Endanschlag ausgebildet, welcher den Kippwinkel einer an den Lagerböcken abgestützten Sattelkupplung begrenzt. Der Endanschlag verhindert auf wirksame Weise eine Kollision der Sattelkupplung mit dem Fahrzeugrahmen. Auch der Endanschlag sollte unlösbar, beispielsweise als Guss-Nase, an mindestens einem Lagerbock oder dem Querträger ausgeformt sein.

Zweckmäßigerweise greifen die Lagerböcke auf der Oberseite des Querträgers an diesem an. Hierdurch weist der Querträger eine konstante Breite auf und lässt sich ohne Anpassungen in die überwiegende Anzahl der Fahrzeugrahmen ohne konstruktive Anpassungen einbauen.

Die Aufgabe wird auch durch eine Anordnung einer Stütztraverse zwischen zwei Holmen eines Fahrzeugrahmens gelöst, bei welcher die Holme in der Fahrzeuglängsachse zueinander versetzte Bohrungen aufweisen, die eine Befestigung der Stütztraverse in unterschiedlichen Positionen erlauben. Hieraus resultiert der Vorteil, dass der Abstand der Sattelkupplung zum Fahrerhaus und somit das Spaltmaß zwischen Aufliegervorderseite und Fahrerhaus einstellbar ist. Darüber hinaus kann durch die Wahl der Einbauposition in Fahrtrichtung Einfluss auf die Achslast genommen werden.

Zum besseren Verständnis wird die Erfindung nachfolgend anhand von vier Figuren näher erläutert. Es zeigen die:
- **Figur 1:**: eine perspektivische Vorderansicht auf eine Stütztraverse;
- **Figur 2:**: eine perspektivische Rückansicht auf eine Stütztraverse mit darauf befestigter Sattelkupplungsplatte;
- **Figur 3:**: eine Vorderansicht auf eine Stütztraverse mit darauf befestigter Sattelkupplungsplatte im Einbauzustand und
- **Figur 4:**: eine perspektivische Draufsicht auf eine in ein Zugfahrzeug montierte Stütztraverse.

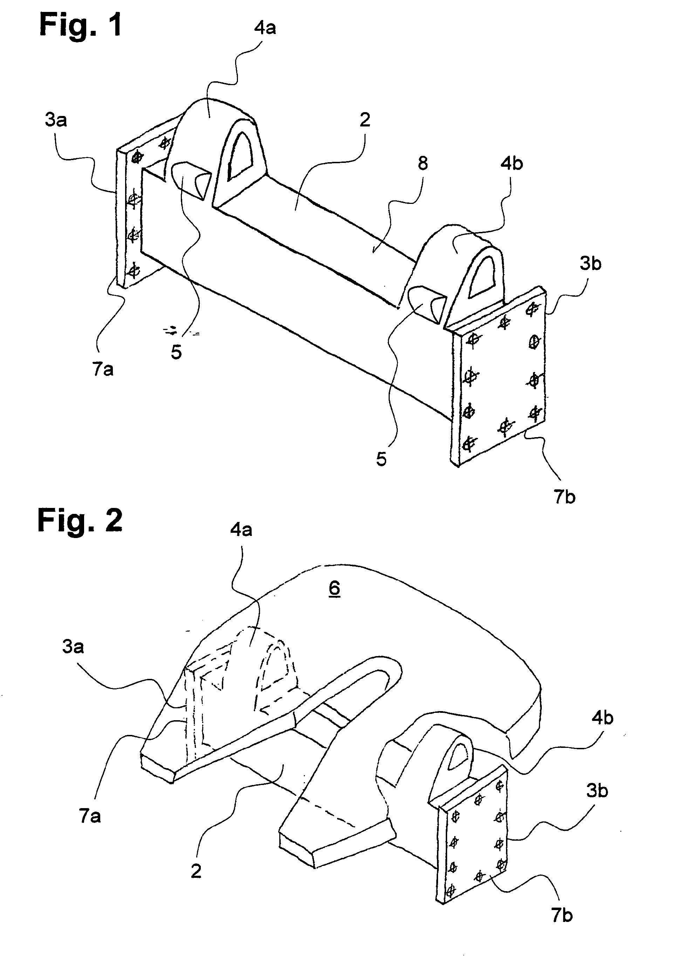

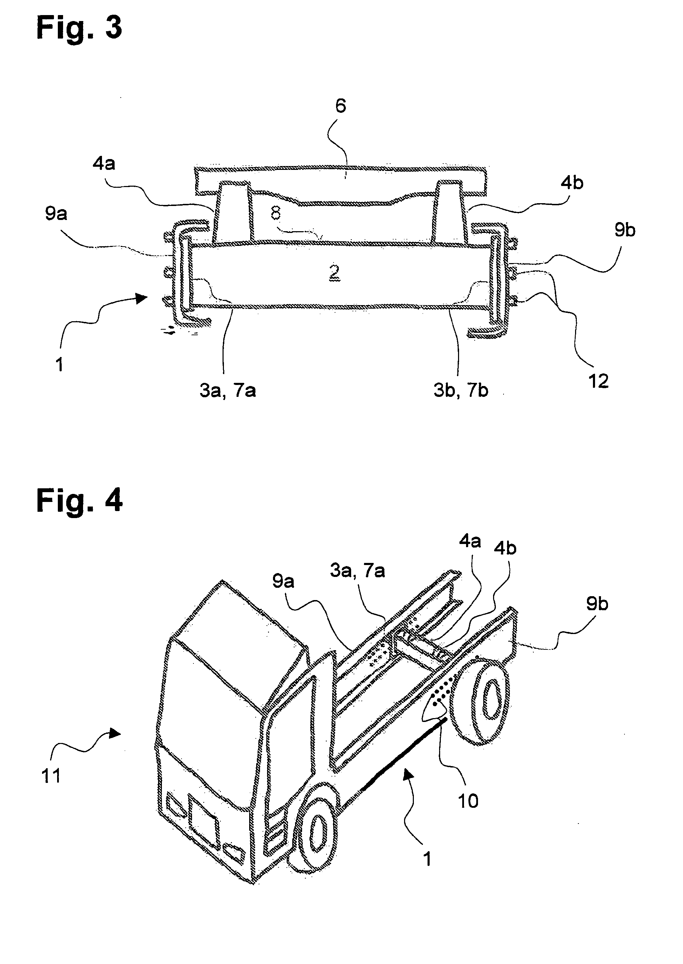

Die Figur 1 zeigt die erfindungsgemäße Stütztraverse in einer perspektivischen Vorderansicht mit einem als Vierkantprofil ausgeformten Querträger 2, der endseitig Befestigungsbereiche 3a, 3b zur Montage an einen Fahrzeugrahmen 1 (siehe Figuren 3 und 4) aufweist. Jeder Befestigungsbereich 3a, 3b ist aus einer rechteckigen Flanschplatte 7a, 7b gebildet, in welcher nicht näher bezeichnete Bohrungen zur Montage an den Fahrzeugrahmen 1 eingebracht sind. Die Flanschplatte 7a, 7b ist rechtwinklig zu der axialen Erstreckung des Querträgers 2 ausgerichtet und einstückig mit diesem verbunden.

Ausschließlich auf der Oberseite 8 des Querträgers 2 sind zueinander beabstandet zwei Lagerböcke 4a, 4b zu erkennen. Jeder Lagerbock 4a, 4b weist eine konvexe Form auf und greift lediglich auf der Oberseite 8 an den Querträger 2 an. Auf der Umfangswand der Lagerböcke 4a, 4b ragt außerdem ein Endanschlag 5 vor, der ebenfalls einstückig mit dem jeweiligen Lagerbock 4a, 4b verbunden ist. Auf der gegenüber liegenden Rückseite der Lagerböcke 4a, 4b kann ebenfalls jeweils ein entsprechend ausgeformter Endanschlag 5 (nicht gezeigt) vorgesehen sein. Die Endanschläge 5 begrenzen den Kippwinkel der Sattelkupplung 6 (siehe Figur 2) um ihre horizontale, rechtwinklig zur Fahrtrichtung ausgerichtete Schwenkachse.

In der Figur 2 ist die Stütztraverse mit einer darauf befindlichen Sattelkupplung 6 in einer perspektivischen Rückansicht dargestellt. Um eine möglichst stabile Lagerung der Sattelkupplung 6 quer zur Fahrtrichtung zu erzielen, befinden sich die Lagerböcke 4a, 4b möglichst weit außen, unterhalb des Randbereiches der Sattelkupplung. Somit befinden sich die Lagerböcke 4a, 4b grundsätzlich in räumlicher Nähe zu den Flanschplatten 7a, 7b.

Die Figur 3 zeigt eine Vorderansicht auf die Stütztraverse in eingebautem Zustand zwischen Holmen 9a, 9b eines Fahrzeugrahmens 1. Dabei ist zu erkennen, dass der Querträger 2 bis in das U-Profil der Holme 9a, 9b hineinreicht. In dieser eingebauten Position befindet sich zwischen den oberen horizontal ausgerichteten Schenkeln der Holme 9a, 9b und dem jeweiligen Lagerbock 4a, 4b nur ein äußerst geringer Bauabstand.

In der Figur 4 ist die Einbauposition der Stütztraverse in ein Zugfahrzeug 11 besonders gut zu erkennen. Die Stütztraverse befindet sich im montierten Zustand ungefähr im Bereich der Hinterachse, kann aber über ihre Befestigungsbereiche 3a, 3b, von denen lediglich der Befestigungsbereich 3a erkennbar ist, und die in den Holmen 9a, 9b angeordneten Bohrungen 10 auch in anderen Positionen, versetzt in der Fahrzeuglängsachse, eingebaut werden. Durch die Bohrungen 10 erstrecken sich die Befestigungsschrauben 12 (siehe Figur 3).

### Bezugszeichenliste

- 1: Fahrzeugrahmen
- 2: Querträger
- 3a, b: Befestigungsbereich
- 4a, b: Lagerbock
- 5: Endanschlag
- 6: Sattelkupplung
- 7a, b: Flanschplatte
- 8: Oberseite Querträger
- 9a, b: Holme Fahrzeugrahmen
- 10: Bohrung
- 11: Zugfahrzeug
- 12: Befestigungsschrauben

## Patentansprüche

1. Stütztraverse zur Aussteifung eines Fahrzeugrahmens (1), umfassend einen Querträger (2) mit einem jeweils endseitig daran ausgeformten Befestigungsbereich (3a, 3b), welcher mit dem Fahrzeugrahmen (1) verbindbar ist, sowie zwischen den Befestigungsbereichen (3a, 3b) an dem Querträger (2) angreifende Lagerböcke (4a, 4b), wobei die Lagerböcke (4a, 4b) und der Querträger (2) unlösbar miteinander verbunden sind, **dadurch gekennzeichnet, dass** die Befestigungsbereiche (3a, 3b) senkrecht zur axialen Erstreckung ausgerichtete Flanschplatten (7a, 7b) sind, welche den als Hohlprofil ausgebildeten Querträger (2) endseitig abschließen.

2. Stütztraverse nach Anspruch 1, **dadurch gekennzeichnet, dass** die Lagerböcke (4a, 4b) und der Querträger (2) als einstückiges Gussteil gefertigt sind.

3. Stütztraverse nach Anspruch 1, **dadurch gekennzeichnet, dass** die Lagerböcke (4a, 4b) mittels einer Nietverbindung an dem Querträger (2) befestigt sind.

4. Stütztraverse nach einem der Ansprüche 1 bis 3, **dadurch gekennzeichnet, dass** an dem Querträger (2) und/oder den Lagerböcken (4a, 4b) mindestens ein Endanschlag (5) ausgebildet ist, welcher den Kippwinkel einer an den Lagerböcken (4a, 4b) abgestützten Sattelkupplung (6) begrenzt.

5. Stütztraverse nach einem der Ansprüche 1 bis 4, **dadurch gekennzeichnet, dass** der Querträger (2) ein Vierkantprofil ist.

6. Stütztraverse nach einem der Ansprüche 1 bis 5, **dadurch gekennzeichnet, dass** die Lagerböcke (4a, 4b) ausschließlich auf der Oberseite (8) des Querträgers (2) an diesem angreifen.

7. Anordnung einer Stütztraverse nach einem der Ansprüche 1 bis 6 zwischen zwei Holmen (9a, 9b) eines Fahrzeugrahmens (1), **dadurch gekennzeichnet, dass** die Holme (9a, 9b) in der Fahrzeuglängsachse zueinander versetzte Bohrungen (10) aufweisen, die eine Befestigung der Stütztraverse in unterschiedlichen Positionen erlauben.

## Claims

1. Supporting cross-member for reinforcing a vehicle frame (1), comprising a transverse carrier (2) having a securing region (3a, 3b) which is formed thereon at each end, respectively, and which can be connected to the vehicle frame (1), and bearing blocks (4a, 4b) which engage between the securing regions (3a, 3b) on the transverse carrier (2), the bearing blocks (4a, 4b) and the transverse carrier (2) being permanently connected to each other, **characterised in that** the securing regions (3a, 3b) are flange plates (7a, 7b) which are orientated perpendicularly relative to the axial extent and which terminate the transverse carrier (2) which is constructed as a hallow profile-member at the end side.

2. Supporting cross-member according to claim 1, **characterised in that** the bearing blocks (4a, 4b) and the transverse carrier (2) are produced as an integral cast component.

3. Supporting cross-member according to claim 1, **characterised in that** the bearing blocks (4a, 4b) are secured to the transverse carrier (2) by means of a rivet connection.

4. Supporting cross-member according to any one of claims 1 to 3, **characterised in that** there is formed on the transverse carrier (2) and/or on the bearing blocks (4a, 4b) at least one end stop (5) which delimits the tilting angle of a fifth wheel (6) which is supported on the bearing blocks (4a, 4b).

5. Supporting cross-member according to any one of claims 1 to 4, **characterised in that** the transverse carrier (2) is a square profile-member.

6. Supporting cross-member according to any one of claims 1 to 5, **characterised in that** the bearing blocks (4a, 4b) engage on the transverse carrier (2) only at the upper side (8) thereof.

7. Arrangement of a supporting cross-member according to any one of claims 1 to 6 between two side rails (9a, 9b) of a vehicle frame (1), **characterised in that** the side rails (9a, 9b) have holes (10) which are offset relative to each other in the vehicle longitudinal axis and which allow the supporting cross-member to be secured in different positions.

## Revendications

1. Traverse de soutien affectée à la rigidification d'un châssis (1) de véhicule, comprenant un support transversal (2) avec lequel fait respectivement corps, aux extrémités, une zone de fixation (3a, 3b) pouvant être reliée audit châssis (1) de véhicule, ainsi que des paliers de montage (4a, 4b) rapportés sur ledit support transversal (2) entre lesdites zones de fixation (3a, 3b), lesdits paliers de montage (4a, 4b) et ledit support transversal (2) étant reliés mutuellement de manière inamovible, **caractérisée par le fait que** les zones de fixation (3a, 3b) sont des platines de bridage (7a, 7b) orientées perpendiculairement à l'étendue axiale et obturant, aux extrémités, le support transversal (2) réalisé sous la forme d'un profilé creux.

2. Traverse de soutien selon la revendication 1, **caractérisée par le fait que** les paliers de montage (4a, 4b) et le support transversal (2) sont fabriqués en tant que pièce monobloc venue de coulée.

3. Traverse de soutien selon la revendication 1, **caractérisée par le fait que** les paliers de montage (4a, 4b) sont fixés au support transversal (2) au moyen d'une liaison rivetée.

4. Traverse de soutien selon l'une des revendications 1 à 3, **caractérisée par le fait qu'**au moins une butée d'extrémité (5), ménagée sur le support transversal (2) et/ou sur les paliers de montage (4a, 4b), limite l'angle de basculement d'une sellette d'accouplement (6) en appui sur lesdits paliers de montage (4a, 4b).

5. Traverse de soutien selon l'une des revendications 1 à 4, **caractérisée par le fait que** le support transversal (2) est un profilé à quatre pans.

6. Traverse de soutien selon l'une des revendications 1 à 5, **caractérisée par le fait que** les paliers de montage (4a, 4b) sont rapportés, sur le support transversal (2), exclusivement à la face supérieure (8) de ce dernier.

7. Agencement d'une traverse de soutien, conforme à l'une des revendications 1 à 6, entre deux longerons (9a, 9b) d'un châssis (1) de véhicule, **caractérisé par le fait que** les longerons (9a, 9b) comportent des perçages (10) décalés les uns des autres, suivant l'axe longitudinal du véhicule, et autorisant une fixation de la traverse de soutien en différents emplacements.
